# EUROPEAN PATENT APPLICATION

(11) **EP 3 648 414 A1**
(43) Date of publication of application: **06.05.2020**
(21) Application number: 18203785.3
(22) Date of filing: 31.10.2018
(51) Int. Cl.: H04L 12/40, H04L 29/06

(54) **COMMUNICATION SYSTEM, METHOD FOR OPERATING A COMMUNICATION SYSTEM AND MEDICAL IMAGING DEVICE**

(71) Applicant: Siemens Healthcare GmbH, 91052 Erlangen (DE)
(72) Inventor: Kalnischkies, Bernd, 91056 Erlangen (DE)

(57) **Abstract**

Communication system, in particular for a medical imaging device (1), comprising several components (2, 3, 4, 5) communicating with each other using a serial communication bus (6), in particular a CAN bus, implemented by at least one communication line (7) connecting respective pairs of components (2, 3, 4, 5), wherein at least one of the components (2, 3, 4, 5) is configured as a bus guard device, comprising a guarding unit (10), in which a message whitelisting information (27) describing messages permitted on the bus is stored and which is adapted to analyse each message on the communication bus (6) and to destroy and/or mark non-permitted messages and/or prevent their processing in any of the components (2, 3, 4, 5) .

## Description

The invention concerns a communication system, in particular for a medical imaging device, comprising several components communicating with each other using a serial communication bus, in particular a CAN bus, implemented by a least one communication line connecting respective pairs of components. The invention also concerns a method for operating such a communication system, and a medical imaging device, in particular a magnetic resonance imaging device, comprising such a communication system.

Serial communication buses are often used for the communication of components in larger appliances, for example medical imaging devices. Serial communication buses use a message-based protocol to allow the components to communicate with each other in applications without a host computer. A widely used example for such a serial communication bus is a CAN bus (controller area net work). In medical imaging devices serial communication buses are used to connect certain components to the medical imaging device, in particular to control and to monitor these components. Examples for those components are patient tables, cooling components and the like.

Simple serial communication buses, for example the CAN bus, however, do not offer security measures themselves, so that an attacker who gains physical access to the bus can feed messages into the serial communication bus which may manipulate the whole medical imaging device or other appliance. As, in most cases, public profiles are used in higher level protocols, for example CAN open, attacks onto a system, in particular a medical imaging device, are even facilitated since a large part of required information, for example addresses, data types and the like, are accessible without a detailed knowledge of the system.

Using such attacks, a communication system or the respective medical imaging device may be damaged in multiple ways. It may, for example, be possible to obtain relevant information, to change relevant operating parameters, to cause the medical imaging device to switch into a fault condition or error condition, or to destroy the medical imaging device and/or components thereof.

In most cases in today's communication systems it is relied upon the fact that the physical attack is not possible or at least difficult to achieve.

It is an object of the current invention to provide a simple and cost-efficient method for increasing the security in a communication system, in particular a communication system of a medical imaging device.

This problem is solved by providing a communication system, a method for operating a communication system and a medical imaging device as described by the independent claims. Advantageous embodiments are described by the dependent claims.

In a communication system as initially described, at least one of the components is configured as a bus guard device, comprising a guarding unit, in which a message whitelisting information describing messages permitted on the bus is stored and which is adapted to analyse each message on the communication bus and to destroy and/or mark non-permitted messages and/or prevent their processing in any of the components.

The current invention is based on the idea that it is known in the communication system which components are connected to the communication bus and which messages are allowed to be sent on the communication bus. It is thus proposed to configure one of the components connected to the communication bus as a bus guard device, which has a guarding unit to which is, for example, known, which components are connected to the communication bus and what kind of messages these components are allowed to transmit. Since every message in a serial communication bus, in particular a CAN bus, is sent to all components connected to the communication bus, the guarding unit can analyse all messages on the communication bus. If unknown and thus non-permitted messages are detected, these messages are preferably destroyed and/or marked such that their processing in any of the components is prevented. Regarding medical imaging devices, the invention exploits the fact that most serial communication buses connecting components in such medical imaging devices, in particular magnetic resonance imaging devices, are employed in a defined environment which usually does not change over time such that the whitelisting information can be defined, in particular already during a design stage, and without leaving "holes" regarding components and/or functionalities which may or may not be added.

In other words, a serial communication bus, in particular a CAN bus, which itself has no security features, is enhanced by configuring one of the components as a bus guard device, in particular a component which is provided anyway and can be modified by adding the guarding unit. In this manner, attacks using physical access to such embedded communication systems can be prevented using simple means, in particular the addition of a guarding unit to one of the components. The impact of this modification on the performance of the communication system, in particular other components, is negligible. The prevention of physical attacks adds to the intrinsic security of the communication system and can reduce manifold risks, including a complete failure of the medical imaging device due to a compromised communication system. Cost and image damage can be prevented.

Regarding conceivable alternatives, encryption of the messages would require a much higher effort and would have a strong impact on the performance of the communication system and therefore in particular the medical imaging device. It is noted that complete prevention of physical access to the serial communication bus, that is, its communication lines, is in practice, almost unrealizable.

In preferred embodiments, the guarding unit is adapted to analyse at least a part of a message header of each message in real-time, in particular bit-wise, such that a non-permitted message is destroyed and/or marked during the transmission of a message content part at the latest, and/or analysing may be effected by pattern comparison. The data stream on the serial communication bus can, preferably, be analysed bit-wise and, for example, be compared with patterns included in the whitelisting information. That is, the guarding unit may be adapted to compare the header of each message to header patterns described as whitelisted by the whitelisting information. If an unknown header is detected, in particular the comparison fails, a non-permitted message is detected and may be destroyed and/or marked. For example, in a CAN bus, the so-called message ID having a length of 11 bit or 29 bit may be analysed as message header. If a received message ID is not known, the whole message will be destroyed and/or marked such that processing by any component is prevented.

In a concrete embodiment, if the serial communication bus is a CAN bus, the guarding unit may be adapted to destroy a non-permitted message by sending an error frame during transmission of the non-permitted message. In particular if the bit-wise or at least real-time analysis, in particular comparison, is performed by the guarding unit, the non-permitted message will still be sent as it is detected as a non-permitted message such that the sending of an error frame interrupts and destroys the message, causing all components to not process this message. An advantage of this concrete embodiment is that a standardized CAN mechanism, namely the error frame, is used. In this manner, it is ensured that all components connected to the serial communication bus discard/reject the non-permitted message.

In concrete embodiments, the whitelisting information may comprise a list of components permitted as transmitters of messages and/or a list of allowed message types. Usually, this kind of data are stored in a message header, which is preferably analysed.

In embodiments, the guarding unit may comprise a storage device in which the whitelisting information is unchangeably stored or wherein the whitelisting information in the storage device is configurable, in particular by at least one external configuration device. In a first concrete embodiment, the whitelisting information may be pre-programmed, in particular encoded unchangeably into the storage means during a programming step. In the state of the art, many possibilities have already been proposed to one-time program information into a storage device, in particular even hard-coded. This first possibility is in particular advantageous as the configuration of the communication system is known in advance and will not be changed afterwards. In another approach, however, the whitelisting information may be configurable in a configuration step, in particular local or remote, such that, in particular, the whitelisting information may be changed if the configuration of the communication system and/or the medical imaging device changes. In this approach, it is preferred to use a separate configuration interface to access the storage device of the guarding unit.

Preferably, the communication system and/or the medical imaging device comprises at least one, in particular local or remote, supervising device connected to the bus guard device, wherein the bus guard device is adapted to communicate a non-permitted message information to the at least one supervising device if a non-permitted message is detected by the guarding unit, in particular using a communication channel not provided by the serial communication bus. In particular, the guarding unit itself may be able to send the non-permitted message information to the at least one supervising device. In this manner, not only an attack by a physically added node may be prevented, but also a supervising device may be notified of the attack and use it to inform a user and/or generate additional information and/or perform additional actions. The supervising device may be local, in particular at the site of the medical imaging device, but can also be remote, for example at a servicing company or the like. By using a communication channel which is not/does not use the serial communication bus, the notification to the supervising device is not affected by attacks on the communication bus.

In concrete embodiments, each component may comprise at least one interface device connected to all communication lines leading to the component, wherein the guarding unit is a part of the interface device, and/or the guarding unit may comprise an FPGA and/or a microcontroller and/or an ASIC. The interface device, which may comprise a bus controller, as in principle known, may additionally comprise the guarding unit as an additional logic, which acts independently from the bus controller and analyses the messages regarding non-permitted messages according to the whitelisting information. The guarding unit may be implemented using discrete electronic components, but is preferably a programmable logic chip, for example an FPGA, a CPLD or the like.

The invention also concerns a method for operating a communication system according to the invention, wherein each message on the communication bus is analysed by the guarding unit and non-permitted messages are destroyed and/or marked and/or the processing in any of the components is prevented by the guarding unit. All description and remarks regarding the communication system also apply to the operating method such that the same advantages can be achieved.

Finally, the invention also concerns a medical imaging device, in particular a magnetic resonance imaging device, comprising at least one communication system according to the invention.

Further details and advantages of the current invention become apparent from the following description of preferred embodiments, taken in conjunction with the drawings, in which
- Fig. 1: is a principle drawing of a medical imaging device according to the invention,
- Fig. 2: shows a schematic view of the bus guard device, and
- Fig. 3: shows the structure of a message and how it is analysed.

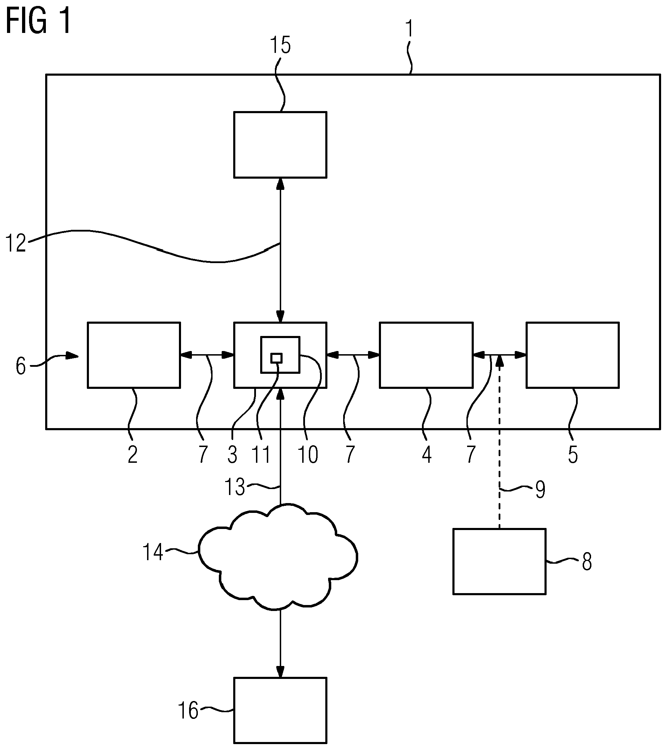

Fig. 1 is a schematic drawing of a medical imaging device 1 according to the current invention, in this case a magnetic resonance imaging device. The medical imaging device 1 comprises four components 2, 3, 4 and 5 which are nodes in a serial communication bus 6, in this case a CAN bus, which is implemented using communication lines 7 between pairs of components 2, 3, 4 and 5. In this case, two communication lines 7 are provided between each of the pairs of components 2, 3, 4, 5, one for each direction. The components may, for example, comprise cooling system components, magnet supervision components, and the like.

Since the communication bus 6 uses physical communication lines 7, there is a risk of a physical attack, that is, an additional node 8, for example a computer of an attacking person, may be connected to the communication line 7 and thus the serial communication bus 6, as indicated by arrow 9. To prevent messages from such external, attacking nodes 8 to influence the serial communication bus 6, one of the components 2, 3, 4, 5, in this case the component 3, is configured as a bus guard device. In particular, component 3 comprises the guarding unit 10 having a storage device 11 in which a whitelisting information describing messages permitted on the serial communication bus 6 is stored. The whitelisting information may, for example, describe components 2, 3, 4, 5 which are allowed to send messages on the serial communication bus 6 and the types of messages allowed, in particular in the form of allowed message headers or parts thereof as defined for messages in a CAN protocol, for example CAN open. The whitelisting information may be programmed into the storage device 11 at the time of manufacturing of the component 3, in particular hard-coded, or may be configured using an external configuration device (not shown), wherein the component 3 may additionally comprise a configuration interface (not shown) for accessing the storage means 11.

The component 3 is also adapted to use communication channels 12, 13, wherein the communication channel 13 uses the internet 14, to send information to a local supervising device 15 and a remote supervising device 16.

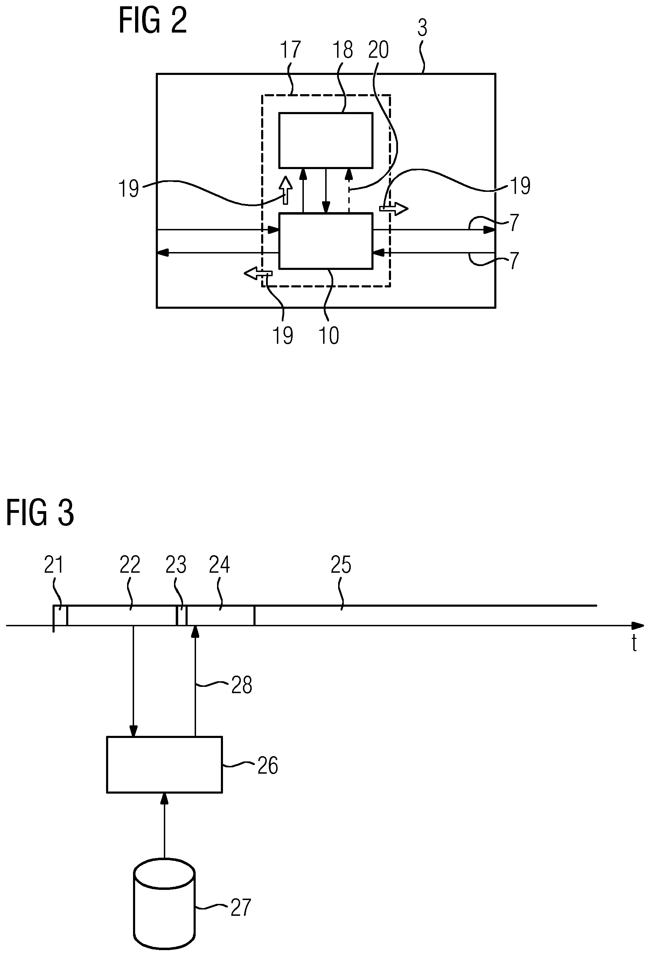

As can be seen from figure 2, in this case, the guarding unit 10 is implemented as a part of a bus interface device 17, which also comprises a bus controller 18, in this case a CAN controller, as known in the state of the art. The guarding unit 10 may, for example, be implemented as an FPGA.

For each message received via one of the communication lines 7, the guarding unit 10 is adapted to compare the message header with the whitelisting information to determine whether the message is a permitted message or a non-permitted message. If a non-permitted message is detected, in particular when the comparison fails, an error frame is sent as indicated by arrows 19 in fig. 2, in particular also to the bus controller 18 of the component 3. Additionally, as indicated by arrow 20, the bus controller 18 or another control unit of the component 3 is controlled to send a non-permitted message information to the supervising devices 15, 16, which may, for example, inform the user of the medical imaging device 1.

The messages are analysed in real-time, in particular bit-wise, in the guarding unit 10 to send the error frame as early as possible during the transmission of the non-permitted message, in this manner destroying it and preventing processing of the message in any of the components 2, 3, 4, 5.

This is explained in detail in fig. 3, which shows the structure of a typical CAN bus message. The message comprises several bits sent sequentially over the serial communication bus 6, forming several parts of the message. The CAN message comprises a start bit 21, a message identifier 22 (as part of a message header), a remote request bit 23, control bits 24, a data field 25 which contains the payload (message content) as well as further parts not shown in fig. 3, for example a CRC field, acknowledge bits, an EOF field and the like. An interframe space, for example of three bits, may be provided.

As soon as bits of the message identifier are received, in a comparison step 26, they are analysed, in particular bit-by-bit, to verify if the message identifier is contained in the allowed message identifiers described by the whitelisting information 27. In this manner, a non-permitted messages can easily and quickly be detected, so that at the latest during the transmission of the data field 25, as indicated by the arrow 28, the error frame may be sent, destroying the message.

Although the present invention has been described in detail with reference to the preferred embodiment, the present invention is not limited by the disclosed examples from which the skilled person is able to derive other variations without departing from the scope of the invention.

## Claims

1. Communication system, in particular for a medical imaging device (1), comprising several components (2, 3, 4, 5) communicating with each other using a serial communication bus (6), in particular a CAN bus, implemented by at least one communication line (7) connecting respective pairs of components (2, 3, 4, 5), **characterized in that** at least one of the components (2, 3, 4, 5) is configured as a bus guard device, comprising a guarding unit (10), in which a message whitelisting information (27) describing messages permitted on the bus is stored and which is adapted to analyse each message on the communication bus (6) and to destroy and/or mark non-permitted messages and/or prevent their processing in any of the components (2, 3, 4, 5).

2. Communication system according to claim 1, **characterized in that** the guarding unit (10) is adapted to analyse at least a part of a message header of each message, in particular a message identifier (22), in real-time, in particular bit-wise, such that a non-permitted message is destroyed and/or marked during the transmission of a message content part at the latest, and/or that analysing is effected by pattern comparison.

3. Communication system according to claim 1 or 2, **characterized in that** the serial communication bus (6) is a CAN bus and that the guarding unit (10) is adapted to destroy a non-permitted message by sending an error frame during transmission of the non-permitted message.

4. Communication system according to one of the preceding claims, **characterized in that** the whitelisting information (27) comprises a list of components (2, 3, 4, 5) permitted as transmitters of messages and/or a list of allowed message types.

5. Communication system according to one of the preceding claims, **characterized in that** the guarding unit (10) comprises a storage device (11) in which the whitelisting information (27) is unchangeably stored or wherein the whitelisting information (27) in the storage device (11) is configurable, in particular by at least one external configuration device.

6. Communication system according to one of the preceding claims, **characterized in that** the communication system and/or the medical imaging device (1) comprises at least one, in particular local or remote, supervising device (15, 16) connected to the bus guard device, wherein the bus guard device is adapted to communicate a non-permitted message information to the at least one supervising device (15, 16) if a non-permitted message is detected by the guarding unit (10), in particular using a communication channel (12, 13) not provided by the serial communication bus (6).

7. Communication system according to one of the preceding claims, **characterized in that** each component (2, 3, 4, 5) comprises at least one interface device (17) connected to all communication lines (7) leading to the component (2, 3, 4, 5), wherein the guarding unit (10) is a part of the interface device (17), and/or that the guarding unit (10) comprises an FPGA and/or a microcontroller and/or an ASIC.

8. Method for operating a communication system according to one of the preceding claims, wherein each message on the communication bus (6) is analysed by the guarding unit (10) and non-permissible messages are destroyed and/or marked and/or their processing in any of the components (2, 3, 4, 5) is prevented by the guarding unit (10).

9. Medical imaging device (1), in particular magnetic resonance imaging device, comprising at least one communication system according to any of the claims 1 to 7.
